# EUROPEAN PATENT APPLICATION

(11) **EP 4 560 261 A1**
(43) Date of publication of application: **28.05.2025**
(21) Application number: 24213980.6
(22) Date of filing: 19.11.2024
(51) Int. Cl.: G01C 15/00

(54) **LASER LEVEL ASSEMBLY**

(30) Priority: 21.11.2023 US 202363601289 P
(71) Applicant: Stanley Black & Decker, Inc., New Britain, CT 06053 (US)
(72) Inventor: SERGYEYENKO, Oleksiy, Baldwin, 21013 (US); JHAWAR, Devansh K., Baltimore, 21201 (US); SCHMITTDIEL, Michael C., Baltimore, 21231 (US); ACHTERBERG, Mr Nicholas E., Maurertown, 22644 (US)
(74) Representative: SBD IPAdmin

(57) **Abstract**

A laser level assembly comprises a bracket comprising a base portion and a mounting portion, and a laser level on the base portion. The laser level comprises at least one laser generator configured to project one or more of: a horizontal laser line, a vertical laser line, or a laser spot. The mounting portion comprises a mounting surface configured to be attached to a structural surface, to attach the laser level assembly to the structural surface. The bracket includes a battery pack receptacle on the base portion, configured to receive a removable battery pack. The base portion has a rear end at the mounting portion, and a front end opposite the rear end. The battery pack receptacle is configured to receive the removable battery pack in a sliding manner in a direction from the rear end of the base portion towards the front end of the base portion.

## Description

The present invention relates to construction tools such as a construction laser level.

There are various existing laser levels. It is desired to provide a laser level assembly with a unique construction.

An aspect of the present disclosure and invention provides a laser level assembly according to Claim 1 of the appended claims.

Preferred, and other optional, features of the disclosure and invention are described and defined in the dependent claims.

It is to be understood that any feature, including any preferred or other optional feature, of any aspect or embodiment of the disclosure or invention may be a feature, including a preferred or other optional feature, of any other aspect or embodiment of the disclosure or invention.

According to another aspect, the present disclosure describes a laser level assembly, including: a bracket comprising a base portion and a mounting portion; a laser level on the base portion, the laser level comprising at least one laser generator and configured to project at least one of a horizontal line, a vertical line or a laser spot. The mounting portion may include a mounting surface configured to attach to a structural surface. The bracket may include a battery pack receptacle. The battery pack receptacle may be configured to selectively receive a first battery pack for powering the laser generator and a second battery pack for powering the laser generator. The battery pack receptacle may be configured such that when the first battery pack is engaged with the battery pack receptacle, the first battery pack extends beyond the mounting surface. The battery pack receptacle may be configured such that when the second battery pack is engaged with the battery pack receptacle, the second battery pack does not extend beyond the mounting surface.

The first battery pack may be engaged with the battery pack receptacle, the first battery pack extends beyond the mounting surface by at least three millimeters.

The mounting surface may be at a back of the bracket.

The battery pack receptacle may be configured to receive the battery pack by sliding the battery pack into the battery pack receptacle from the rear direction.

The battery pack receptacle may include a plurality of rails configured to engage rails of the battery pack.

The battery pack receptacle may include a terminal block.

The terminal block may include electrical connectors.

The terminal block may be disposed closer to the front end of the base portion than the rear end of the base portion.

According to another aspect, the present disclosure describes a laser level assembly, including: a bracket comprising a base portion and a mounting portion; a laser level on the base portion, the laser level comprising at least one laser generator and configured to project at least one of a horizontal line, a vertical line or a laser spot. The mounting portion may include a mounting surface configured to attach to a structural surface; wherein the bracket comprises a battery pack receptacle on the base portion, the battery pack receptacle configured to receive a removable battery pack. The base portion may have a rear end at the mounting portion. The base portion may have a front end opposite the rear end. The battery pack receptacle may be configured to receive the battery pack in a sliding manner in a direction from the rear end of the base portion towards the front end of the base portion.

The battery pack receptacle may include a plurality of rails configured to engage rails of the battery pack.

The battery pack receptacle may include a terminal block.

The terminal block may include electrical connectors.

The terminal block may be disposed closer to the front end of the base portion than the rear end of the base portion.

The mounting portion may be generally perpendicular to the base portion.

The laser level may be configured to project at least the horizontal line and the vertical line.

The laser level may be configured to rotate relative to the bracket.

The laser level may be configured to rotate about an axis generally parallel to the mounting surface.

The bracket may have a generally L-shape.

The mounting portion may be generally perpendicular to the base portion.

According to another aspect, the present disclosure describes a laser level assembly, including: a bracket comprising a base portion and a mounting portion; a laser level on the base portion, the laser level comprising at least one laser generator and configured to project at least one of a horizontal line, a vertical line or a laser spot. The mounting portion may include a mounting surface configured to attach to structural surface. The laser level assembly may include a battery pack receptacle on the base portion, the battery pack receptacle configured to selectively receive battery packs of different lengths. The battery pack receptacle may be positioned on the base portion such that when a battery pack of a first length is engaged with the battery pack receptacle, the battery pack of the first length extends beyond the mounting surface and inhibits mounting of the bracket.

The base portion may have a rear end at the mounting portion.

The base portion may have a front end opposite the rear end.

The battery pack receptacle may be configured to receive the battery pack in a sliding manner in a direction from the rear end of the base portion towards the front end of the base portion.

The invention will now be described, by way of example, with reference to the accompanying figures, of which:
Fig. 1 is a perspective view of an exemplary embodiment of a laser level assembly;
Fig. 2 is a perspective view an exemplary embodiment of a laser level assembly;
Fig. 3 is a perspective view an exemplary embodiment of a laser level assembly;
Fig. 4 is a perspective view an exemplary embodiment of a laser level assembly;
Fig. 5 is a perspective view of an exemplary embodiment of a laser level assembly;
Fig. 6 is a rear view of an exemplary embodiment of a laser level assembly;
Fig. 7 is a bottom view of an exemplary embodiment of a laser level assembly;
Fig. 8 is a side view of an exemplary embodiment of a laser level assembly;
Fig. 9 is a side view of an exemplary embodiment of a laser level assembly;
Fig. 10 is a side view of an exemplary embodiment of a laser level assembly;
Fig. 11 is a side view of an exemplary embodiment of a laser level assembly;
Fig. 12 illustrates a top view of a laser module assembly according to an exemplary embodiment; and
Fig. 13 illustrates a laser module assembly according to an exemplary embodiment.

The drawings are for the purpose of illustration and description only and are not intended as a definition of the limits of the invention. In addition, it should be appreciated that structural features shown or described in any one embodiment herein can be used in other embodiments as well. As used in the specification and in the claims, the singular form of "a", "an", and "the" include plural referents unless the context clearly dictates otherwise.

All closed-ended (e.g., between A and B) and open-ended (greater than C) ranges of values disclosed herein explicitly include all ranges that fall within or nest within such ranges. For example, a disclosed range of 1-10 is understood as also disclosing, among other ranged, 2-10, 1-9, 3-9, etc.

As used herein, the terminology "at least one of A, B and C" and "at least one of A, B and C" each mean any one of A, B or C or any combination of A, B and C. For example, at least one of A, B and C may include only A, only B, only C, A and B, A and C, B and C, or A, B and C.

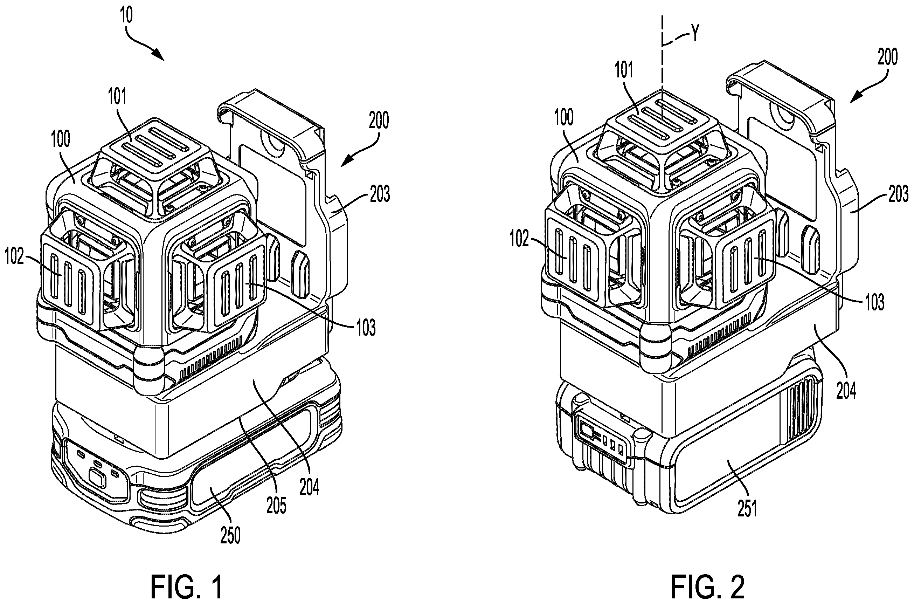

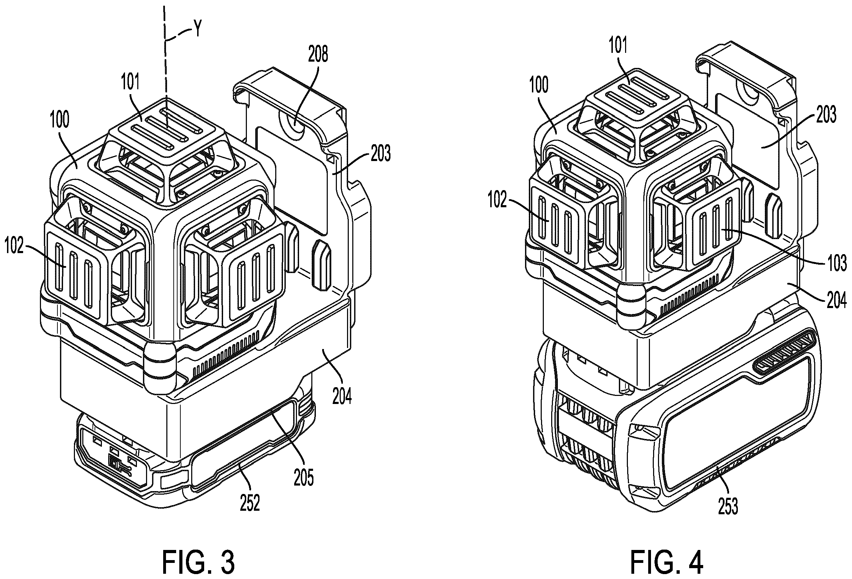

Figs. 1-4 illustrates perspective views of a non-limiting, exemplary embodiment of a laser level assembly 10, each with different battery pack 250, 251, 252, 253 engaged. The laser level assembly 10 of Figs. 1-4 includes a 3 x 360 laser level 100. The laser level 100 produces two vertical laser beams and one horizontal laser beam. As shown in Figs. 1-4, the laser level 100 includes three laser projectors 101, 102 and 103. The three laser projectors project three perpendicular laser beams.

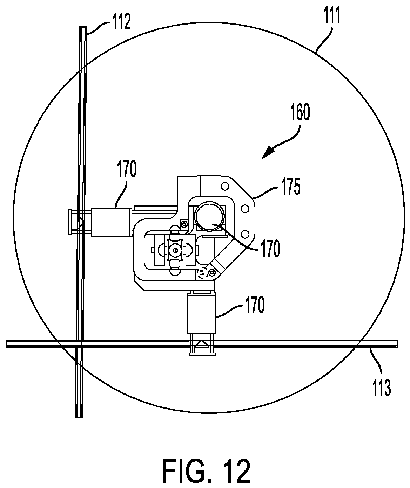

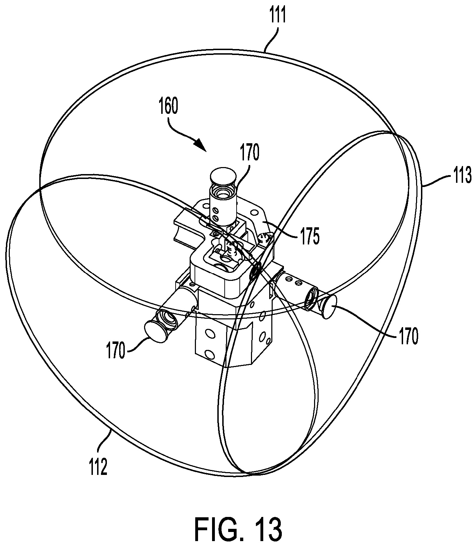

Figs. 12 and 13 illustrate a laser module assembly 160 which produces laser lines 111, 112 and 113 that project out of the three laser projectors 101, 102 and 103, respectively. Fig. 12 is a top view of the laser module assembly 160. Fig. 13 is a perspective view of the laser module assembly 160. The laser module assembly 160 is housed in the housing 110 of the laser level 100. The laser module assembly 160 includes three laser modules 170. The three laser modules 170 are carried on a laser module carrier. In the example embodiment, the laser module carrier is pendulum assembly 175 that is leveled under the influence of gravity. Each laser module includes a laser generator such as a laser diode and a reflector such as a cone reflector. The laser diode produces a laser beam which is reflected off the surface of the reflective cone to project laser lines 111, 112, and 113 at the three laser projectors 101, 102 and 103.

The pendulum assembly 175 rotates about a relatively small angle so that the laser modules 170 project beams in the horizontal and vertical planes when placed on a surface that is not entirely horizontally flat. For example, if the laser level 10 is placed on a surface that is sloped five degrees (5 degrees) with respect to horizontal, the pendulum assembly 175 will tilt under the influence of gravity so that the laser modules 170 are aligned to produce a laser line 111 in a horizontal plane and laser lines 112 and 113 in vertical planes. Additionally, in some embodiments the laser level 100 includes a locking device to lock the pendulum assembly 175. In those instances, the pendulum assembly 110 will be locked in a particular position rather than allowed to rotate under the influence of gravity and it may produce laser lines offset from the vertical and horizontal. In the example embodiment, the laser module carrier may be an actively leveled laser module carrier. For example, the laser module carrier may include sensors for determining a level condition and motors for driving the laser module carrier to particular positions.

The laser lines 111, 112, 113 project out from the laser level 100 onto walls, floors ceilings or other surfaces. As there are three beams which project in a circular pattern, the laser level 100 may be referred to as a 3x360 laser level. When the laser level assembly 10 is attached to a vertical wall at the mounting portion 203, the laser level 100 produces two vertical laser lines and one horizontal laser line. Similarly, when the laser level assembly is placed on a flat horizontal surface, the laser level 100 produces two vertical laser lines and one horizontal laser line. In some instances, the laser level 100 may be considered to be located at a front of the laser level assembly 10 and the mounting portion 203 at the back of the laser level assembly 10. The laser level 100 of the example embodiment is a 3x360 laser level which is configured to project three laser lines. In other embodiments, the laser level may be a different type of laser level and may project various combinations of laser lines and or laser spots. For example, in some embodiments the laser level may be a 5 spot laser level that projects 5 laser spots onto surfaces (left, right, forward, up, down). In some embodiments, the laser level may project lines and spots (e.g., 5 spots, 1 vertical line, 1 horizontal line).

The laser level assembly 10 includes the laser level 100. The laser level 100 is rotationally mounted on a bracket 200. The bracket 200 has a mounting portion 203, a base portion 204, and a bottom 205 at the bottom of the base portion 204. The mounting portion 203 may include magnets so that the bracket 200 can be secured to a metal part such as metal beam, metal stud, metal cabinet or other structure. The mounting portion 203 of the example embodiment also includes a key-hole 208 configured for hanging the bracket 200 on a nail or securing the bracket 200 with a screw. In other embodiments, the mounting portion 203 may have another securing mechanism instead of or in addition to magnets, such as a clamp, tie, strap or other securing structure.

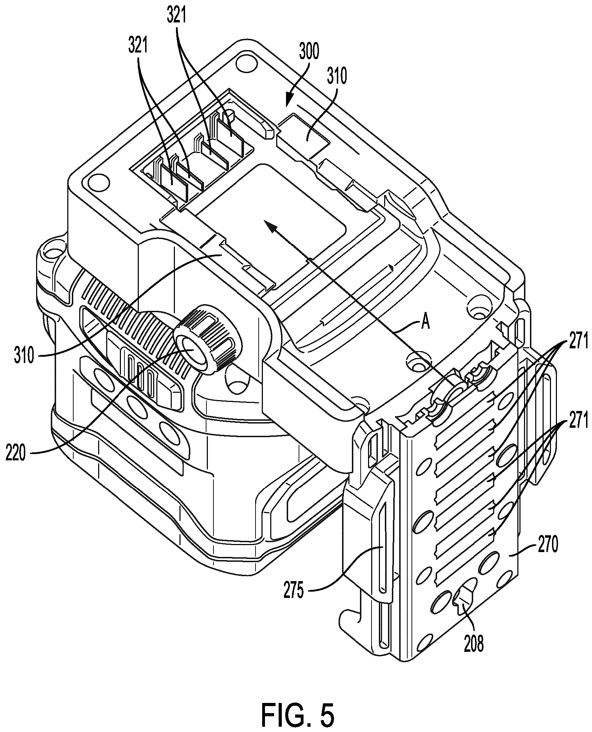

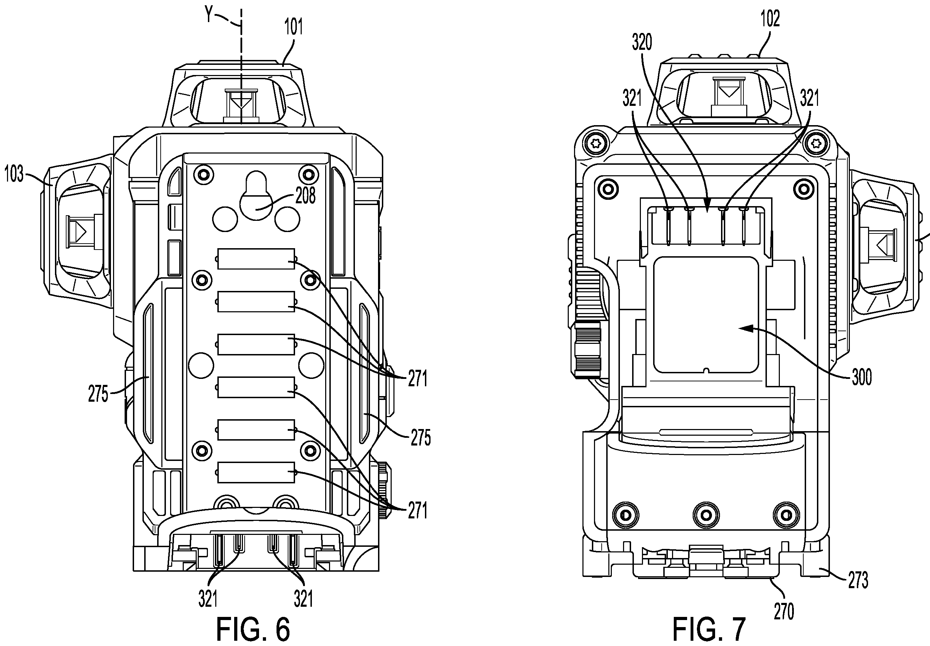

The laser level 100 may be rotatable relative to the bracket 200 about a vertical axis. The axis Y may run through a center of the laser module 170 associated with the laser projector 101. The laser level 100 may be rotatable via motorized or manual means. In the example embodiment, the laser level 100 includes a manual rotation dial 220, as shown in Figs. 5 and 7, which is configured to allow a user to manually rotate the laser level 100 relative to the bracket. The laser level 100 may be mounted to the bracket removably, removably with tools or irremovably.

As shown in Figs. 1-4, the base portion 204 of the bracket 200 receives a battery pack at the bottom 205. The bracket 200 of the laser level assembly 10 may receive battery packs of a variety of different sizes.

Fig. 5 illustrates a bottom isometric view of the laser level assembly 10. As shown, the bottom 205 of the bracket 200 includes a battery pack receptacle 300. The battery pack receptacle 300 includes parts for receiving the various battery packs 250, 251, 252, 253. The battery pack receptacle 300 includes a pair of rails 310. The rails 310 engage with rails of the battery packs 250, 251, 252 and 253. In the example embodiment, there are two rails 310. In other embodiments, there may be more or fewer than two rails.

The battery pack receptacle 300 also includes a terminal block 320. The terminal block includes a plurality of electrical connectors 321. The electrical connectors 321 engage with electrical connectors of the battery packs 250, 251, 252 and 253. The battery packs 250, 251, 252 and 253 provide power to the laser level 100. For example, power from an engaged battery pack 250, 251, 252, 253 may provide power to one or more laser diode of the laser module assemblies 170. The battery packs 250, 251, 252, 253 may also provide power to components in the bracket 200 in the event that electrical components are contained in the bracket (e.g., motor, controller, sensors, transceivers, LEDs).

In the illustrated example embodiment, there are four electrical connectors 321 and the electrical connectors 321 may be configured to engage with a negative terminal, a positive terminal, an ID terminal and a temperature terminal of the battery packs 250, 251, 252 and 253. In other embodiments, there may be more or fewer electrical connectors 321.

As shown in Fig. 5, the terminal block 320 with electrical connectors 321 is located at a relatively forward end of the mount 200, particularly the base portion 204 of the mount 200. The terminal block 320 is remote from the mounting portion 203 of the bracket 200, including the magnets 271 on a mounting surface 270 of the mounting portion 203 of the bracket 200. The battery packs 250, 251, 252, 253 may be inserted into the battery pack receptacle 300 along the direction A shown in Fig. 5, in a direction from the rear of the bracket 200 defined by the mounting surface 270 and a front of the bracket 200. The terminal block 320 of the example embodiment is closer to a forward end of the base portion 204 of the bracket 200 than to a rear end of the base portion 204 of the bracket. The bracket 200 may include guide rails 275 that may, for example, assist in mounting the bracket 200 to a ceiling mount such as a ceiling mount clamp.

Fig. 6 is a rear view of the laser level assembly 10 and Fig. 7 is a bottom view of the laser level assembly 10.

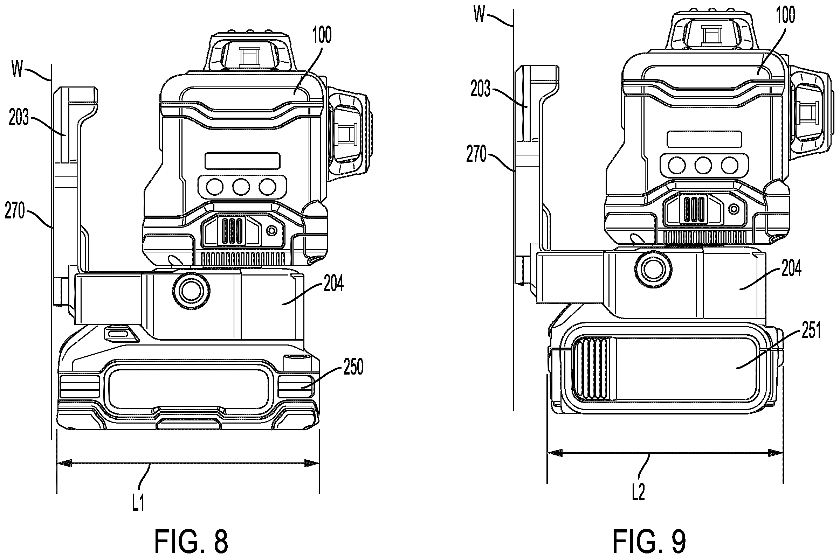

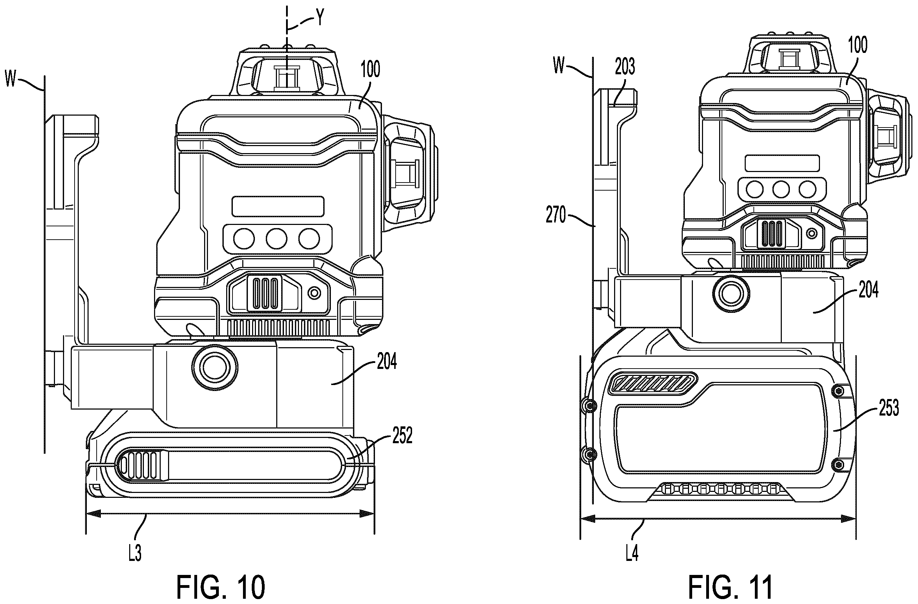

Advantageously, and as is apparent from the example embodiments of Figs. 8, 9, and 10, the laser level assembly 10 may be configured such that a battery pack 250, 251, 252 cannot be removed from the battery pack receptacle 300 when the structural surface W, to which the mounting surface 270 is attached, is a vertical wall W or some other blocking structure. This prevents a user from attempting to replace the battery pack 250, 251, 252 while the laser level assembly 10 is attached to a vertical structural surface W, and is a safety and/or best practice use feature, to avoid the laser level assembly 10 being dislodged from the wall or other structural surface (while the user is attempting to replace the battery pack), which could, for example, cause the laser level assembly 10 to be dropped or at least put the laser level 100 out of alignment (from a previously aligned position or orientation).

Figs. 8-11 are side views of the laser level assembly 10 with the different battery packs 250, 251, 252 and 253 with a vertical structural surface W such as, for example, a metal wall I-Beam, pipe, cabinet, or ceiling bracket or additional bracket or clamp. As shown, packs 250, 251, 252 and 253 have different lengths L1, L2, L3 and L4, respectively. Accordingly, each of the battery packs 250, 251, 252 and 253 extend from the battery pack receptacle 300, terminal block 320 and electrical connectors 321 a different amount.

In the example embodiments, L4 > L1 > L2 > L3. In the example embodiment, the pack 253 with the greatest length L4 would extend past the workpiece W if a user attempts to mount the laser level assembly 10 with the battery pack 235 to the vertical workpiece W at the surface 270 on the mount portion 203. Accordingly, the battery pack 253 with the length L4 inhibits mounting of the bracket 200. On the other hand, the battery packs 250, 251, 252 with smaller lengths L1, L2, L3 are spaced from the workpiece W and do not inhibit mounting of the bracket 200. That is, in the example embodiment, each of the battery packs 250, 251, 252, 253 can engage with the mount 200 at the battery pack receptacle 300 in order to provide power to the laser level 100. However, the pack 253 with the greatest length L4 extends beyond a rear surface 270 of the mount and inhibits mounting of the bracket 200, such as to a vertical wall.

In other example embodiments, the distance of the battery pack receptacle 300 from the rear surface 270 is different so that more than one pack 253 inhibits mounting of the bracket 200. For example, the battery pack receptacle 300 and terminal block 320 may be positioned such that the battery packs 253 (with length L4) and 250 (with length L1) both inhibit attachment of the mount 200 to a surface W, while battery packs 251 (with length L2) and 252 (with length L3) may have a sufficiently small length so as to not project beyond the rear surface 270 and not inhibit mounting.

The battery packs may have different weights as well such that when engaged with the battery pack receptacle to provide power for the laser level assembly 10, a battery pack of a first weight may not extend beyond the rear surface 270 to inhibit mounting by the mounting portion and a battery pack of a second weight may extend beyond the rear or mounting surface and inhibit mounting by the mounting portion. For example, the laser level system and battery packs may be configured such that the first weight is greater than the second weight; the first weight may be at least 100 grams greater than the second weight; at least 200 grams greater than the second weight; or at least 300 grams greater than the second weight. The first weight may be at least 750 grams; the first weight may be at least 800 grams; the first weight may be at least 900 grams; the first weight may be at least 1,000 grams; the first weight may be at least 1,100 grams; or the first weight may be at least 1,200 grams.

Inhibiting or preventing the laser level assembly 10 from being attached to a vertical planar wall surface W when a removable battery pack 253 of a particular minimum size and weight is received in the battery pack receptacle can be a safety and/or best practice use feature, to avoid the laser level assembly 10 being attached to a vertical planar wall surface Wwhen the removable battery pack 253 is too heavy for the combined laser level assembly 10 and battery pack 253 to be safely supported by the attachment to the wall surface W by the mounting surface 270 of the mounting portion 203. This can especially be the case (but is not necessarily limited to) when the attachment is (solely) by means of magnets 271 on the mounting surface 270 of the mounting portion 203, for example.

Battery packs of different lengths may extend beyond the rear or mounting surface of the mounting portion 203 of the bracket 200 when engaged with the battery pack receptacle to provide power for the laser level assembly 10. For example, in an embodiment, a battery pack with a length of 90 mm or greater may extend beyond the rear or mounting surface and inhibit mounting by the mounting portion 203 of the bracket 200. In an embodiment, a battery pack with a length of 90 mm or greater may extend beyond the rear or mounting surface and inhibit mounting by the mounting portion of the bracket. In an embodiment, a battery pack with a length of 100 mm or greater may extend beyond the rear or mounting surface and inhibit mounting by the mounting portion of the bracket. In an embodiment, a battery pack with a length of 110 mm or greater may extend beyond the rear or mounting surface and inhibit mounting by the mounting portion of the bracket. In an embodiment, a battery pack with a length of 120 mm or greater may extend beyond the rear or mounting surface and inhibit mounting by the mounting portion of the bracket. In an embodiment, a battery pack with a length of 130 mm or greater may extend beyond the rear or mounting surface and inhibit mounting by the mounting portion of the bracket. In an embodiment, a battery pack with a length of 140 mm or greater may extend beyond the rear or mounting surface and inhibit mounting by the mounting portion of the bracket. In an embodiment, a battery pack with a length of 150 mm or greater may extend beyond the rear or mounting surface and inhibit mounting by the mounting portion of the bracket.

In an embodiment, battery packs of lesser lengths may be short of the rear or mounting surface of the mounting portion 203 of the bracket 200 when engaged with the battery pack receptacle to provide power for the laser level assembly 10. For example, in an embodiment, a battery pack with a length of 130 mm or less may be spaced short of an rear or mounting surface of the mounting portion of the bracket so that the battery pack does not extend beyond the rear or mounting surface. For example, in an embodiment, a battery pack with a length of 120 mm or less may be spaced short of an rear or mounting surface of the mounting portion of the bracket so that the battery pack does not extend beyond the rear or mounting surface. For example, in an embodiment, a battery pack with a length of 110 mm or less may be spaced short of a rear or mounting surface of the mounting portion of the bracket so that the battery pack does not extend beyond the rear or mounting surface. For example, in an embodiment, a battery pack with a length of 100 mm or less may be spaced short of a rear or mounting surface of the mounting portion of the bracket so that the battery pack does not extend beyond the rear or mounting surface. For example, in an embodiment, a battery pack with a length of 90 mm or less may be spaced short of a rear or mounting surface of the mounting portion of the bracket so that the battery pack does not extend beyond the rear or mounting surface. For example, in an embodiment, a battery pack with a length of 80 mm or less may be spaced short of a rear or mounting surface of the mounting portion of the bracket so that the battery pack does not extend beyond the rear or mounting surface.

A location or configuration of the battery pack receptacle may be changed in various embodiments in order to change the threshold at what length of a battery pack may cause it to extend beyond the rear or mounting surface of the mounting portion 203 of the bracket 200. For example, the terminal block 320 in some embodiments may be spaced relatively farther away from the rear or mounting surface of the mounting portion 203 of the bracket 200 so that battery packs with relatively longer lengths may be accommodated without the battery packs extending past the rear or mounting surface. Conversely, the terminal block 320 in some embodiments may be spaced relatively closer to the rear or mounting surface of the mounting portion 203 of the bracket 200 so that only battery packs with relatively shorter lengths may be accommodated without the battery packs extending past the rear or mounting surface.

In an example embodiment, an electrical connector 321 may be at least 100 mm from the rear or mounting surface; at least 110 mm from the rear or mounting surface; at least 120 mm from the rear or mounting surface; at least 120 mm from the rear or mounting surface; at least 130 mm from the rear or mounting surface at least 140 mm from the rear or mounting surface; or at least 150 mm from the rear or mounting surface.

In an example embodiment, an electrical connector 321 may be less than 200 mm from the rear or mounting surface; less than 190 mm from the rear or mounting surface; less than 180 mm from the rear or mounting surface; less than 170 mm from the rear or mounting surface; less than 160 mm from the rear or mounting surface; less than 150 mm from the rear or mounting surface; or less than 140 mm from the rear or mounting surface.

Although described by way of exemplary embodiments, it is understood that the words which have been used herein are words of description, rather than words of limitation. Although the description provided above provides detail for the purpose of illustration based on what is currently considered to be the most practical and preferred embodiments, it is to be understood that such detail is solely for that purpose and that the disclosure is not limited to the expressly disclosed embodiments, but, on the contrary, is intended to cover modifications and equivalent arrangements that are within the scope of the appended claims

It is to be understood that the present disclosure contemplates that, to the extent possible, one or more features of any embodiment can be combined or exchanged with one or more features of any other embodiment.

## Claims

1. A laser level assembly, comprising:
a bracket comprising a base portion and a mounting portion;
a laser level on the base portion, the laser level comprising at least one laser generator and configured to project one or more of: a horizontal laser line, a vertical laser line, or a laser spot;
wherein the mounting portion comprises a mounting surface configured to be attached to a structural surface, to attach the laser level assembly to the structural surface;
wherein the bracket comprises a battery pack receptacle on the base portion, the battery pack receptacle configured to receive a removable battery pack;
wherein the base portion has a rear end at the mounting portion, and a front end opposite the rear end; and
wherein the battery pack receptacle is configured to receive the removable battery pack in a sliding manner in a direction from the rear end of the base portion towards the front end of the base portion.

2. A laser level assembly according to Claim 1, further comprising a said removable battery pack receivable or received in the battery pack receptacle.

3. A laser level assembly according to Claim 1 or Claim 2, configured such that the battery pack cannot be removed from the battery pack receptacle when the structural surface is a vertical planar wall surface and the mounting surface is attached to the vertical planar wall surface.

4. A laser level assembly according to any preceding claim, wherein the battery pack receptacle includes an open end through which the battery pack may be slidingly received into the battery pack receptacle.

5. A laser level assembly according to Claim 4, wherein the open end of the battery pack receptacle is towards, or adjacent to, the rear end of the base portion.

6. A laser level assembly according to Claim 4 or Claim 5, wherein the battery pack receptacle has a closed opposite end, preferably towards, or adjacent to, the front end of the base portion.

7. A laser level assembly according to any preceding claim, wherein the battery pack receptacle includes a terminal block comprising electrical connectors configured to engage with corresponding electrical connectors of the battery pack.

8. A laser level assembly according to Claim 7 when dependent on Claim 6, wherein the terminal block is located at or adjacent to the closed end of the battery pack receptacle.

9. A laser level assembly according to any preceding claim, wherein the battery pack receptacle comprises a plurality of rails configured to engage corresponding rails of the battery pack in the sliding manner.

10. A laser level assembly according to any preceding claim, wherein the battery pack receptacle is located at a bottom of the base portion, preferably on an underside of the base portion.

11. A laser level assembly according to any preceding claim, wherein the laser level includes a laser module carrier in the form of a self-levelling pendulum assembly configured to project one or more laser lines automatically levelled with respect to gravity.

12. A laser level assembly according to any preceding claim, wherein the laser level is configured to be rotatable relative to the bracket.

13. A laser level assembly according to Claim 12, wherein laser level is configured to be rotatable about an axis generally parallel to the mounting surface, both of which are preferably arranged to be oriented substantially vertically in use.

14. A laser level assembly according to any preceding claim, wherein the mounting surface is generally perpendicular to the base portion, and preferably wherein the base portion is arranged to be oriented substantially horizontally in use.

15. A laser level assembly according to any preceding claim, wherein the bracket is a generally L-shaped.
